# EUROPÄISCHE PATENTSCHRIFT

(11) **EP 0 924 023 B1**
(45) Veröffentlichungstag und Bekanntmachung des Hinweises auf die Patenterteilung: **21.05.2003**
(21) Anmeldenummer: 97811009.6
(22) Anmeldetag: 22.12.1997
(51) Int. Cl.: B23P 6/04

(54) **Verfahren zur Einbringung eines Ausnehmungsabschlusses in ein Bauteil**
Method of setting a recess termination in an article
Procédé pour installer une terminaison pour un évidement d'un élément

(43) Veröffentlichungstag der Anmeldung: 23.06.1999
(73) Patentinhaber: ALSTOM (Switzerland) Ltd, 5401 Baden (CH)
(72) Erfinder: Nguyen, Uy-Liem, Dr., 5405 Baden-Dättwil (CH); Krautzig, Joachim, Dr., 8967 Widen (CH)

(56) Entgegenhaltungen:
- GB-A- 1 376 731
- US-A- 4 383 556
- DATABASE WPI Section PQ, Week 9133 Derwent Publications Ltd., London, GB; Class P56, AN 91-244748 XP002064737 -& SU 1 613 293 A (REDMETAL ASSOC) , 7.Dezember 1990
- DATABASE WPI Section PQ, Week 9021 Derwent Publications Ltd., London, GB; Class P56, AN 90-162702 XP002064738 -& SU 1 500 458 A (CHELYABINSK POLY) , 15.August 1989
- DATABASE WPI Section PQ, Week 8617 Derwent Publications Ltd., London, GB; Class P56, AN 86-111479 XP002064739 -& SU 1 181 844 A (PHYS MECH INST) , 30.September 1985
- DATABASE WPI Week 199043, 05 Dezember 1990 Derwent Publications Ltd., London, GB; Class P56, AN 1990-326549 & SU 1 532 265 A (REDMETAL PARTS RECO) 30 Dezember 1989

## Beschreibung

### Technisches Gebiet

Die Erfindung betrifft ein Verfahren zur Einbringung eines Ausnehmungsabschlusses in ein Bauteil gemäß Oberbegriff des Anspruchs 1. So ein Verfahren ist aus SU-A-1613293 bekannt. Der Abschluss der Ausnehmung soll dabei so ausgeführt sein, dass diese trotz Belastung des Bauteiles nicht weiter wächst.

### Stand der Technik

Im Maschinen- und Apparatebau entsteht oft das Problem, einen aufgrund zu hoher Belastung gewachsenen Riss am Weiterwachsen zu hindern, bzw. ein Risswachstum aufgrund der Kerbwirkung am Ende eines gezielt in eine Wand eines Bauteiles eingearbeiteten Entlastungschlitzes auszuschliessen. Eine bekannte Methode des Standes der Technik zur Lösung dieses Problems besteht im "Abbohren" der Ausnehmung, indem an der Spitze des Risses bzw. Schlitzes ein Loch mit einem ausreichend grossen Bohrungsdurchmesser gebohrt wird.

Unter Ausnehmung soll im folgenden ein natürlich gewachsener Riss, eine schwächende, risslenkende Kerbe als "Sollbruchstelle", die eine Rissausbreitung nur in der vorgezeichneten Richtung zulässt und wegen der geringen Öffnung eines gewachsenen Risses in der restlichen Wanddicke nur einen minimalen Leckagequerschnitt verursacht oder ein gezielt in ein Bauteil eingebrachter Schlitz verstanden werden.

Durch das Abbohren der Ausnehmungsspitze wird nachteilig ein erheblicher Leckagequerschnitt geschaffen, der z. B. im Strömungsmaschinenbau unerwünscht ist. Aus diesem Grunde sowie aus Festigkeitsgründen wird daher oft in der Praxis ein Bohrungsdurchmesser gewählt, der zu klein ist, um zu einer dauerhaften Lösung des o. g. Problems zu führen.

Aufgrund bruchmechanischer Erkenntnisse ist bekannt, dass durch ein geeignetes Auslaufen der Rissspitze, d. h. eine geeignete Gestaltung des Ausnehmungsabschlusses, ein weiteres Wachstum des Risses bzw. der Ausnehmung gehemmt bzw. verhindert werden kann, so dass es möglich ist, das Bauteil weiter einzusetzen und zu belasten.

Im Dokument SU 1613293 A2 wird ein Verfahren zur Hemmung des Risswachstumes eines mit Rissverzweigungen versehenen Ermüdungsrisses in ebenen Bauteilen mit relativ geringer Wandstärke (Blechen) beschrieben. Bei diesem Verfahren wird ein Verklammerungssystem angewendet, bei dem an die Spitze des Risses zwei seitliche Rillen/Nuten in das Bauteil eingebracht werden, die den Riss aufspreizen und zwar so, dass die eine Rille zunächst an der oberen Fläche des Bauteiles und die andere Rille an der unteren Fläche des Bauteiles verläuft und nach einer Umlenkung von mindestens 180° ein geschlossener Kreis von diesen beiden Rillen gebildet wird und abschliessend ein Draht in diese Rillen gepresst wird.

Nachteilig an diesem Verfahren ist das komplizierte Fräsen der Rillen.

### Darstellung der Erfindung

Die Erfindung versucht, die genannten Nachteile des Standes der Technik zu vermeiden. Ihr liegt die Aufgabe zugrunde, ein Verfahren zur Einbringung eines Ausnehmungsabschlusses in einem Bauteil zu schaffen, mit dem einerseits eine Rissentstehung oder ein weiteres Risswachstum in der Ausnehmung sicher verhindert wird und andererseits keine verstärkte Leckage auftritt.

Erfindungsgemäss wird dies durch ein Verfahren gemäß Anspruch 1 erreicht.

Die Vorteile der Erfindung bestehen darin, dass das Weiterwachstum eines vorhandenen Risses verhindert wird bzw. ein Rissbeginn am Ende eines bewusst eingebrachten Schlitzes ausgeschlossen wird, so dass das Bauteil problemlos weiter beansprucht werden kann. Ausserdem entstehen durch das erfindungsgemässe Verfahren keine grossen Löcher im Bauteil, so dass Leckageverluste, beispielsweise in thermischen Strömungsmaschinen, minimiert werden können.

Es ist besonders zweckmässig, wenn die Krümmung in Form eines Halb- bis Dreiviertelkreises, einer -ellipse oder -spirale oder ähnlicher Kurve ausgeführt wird. Diese Formen sind besonders gut geeignet, einen Anriss zu verhindern bzw. das Risswachstum zu stoppen.

### Kurze Beschreibung der Zeichnung

In der Zeichnung sind mehrere Ausführungsbeispiele der Erfindung dargestellt.

Es zeigen:
- Fig. 1: einen Schnitt durch eine Ausnehmung in einer ersten Ausführungsvariante der Erfindung;
- Fig. 2: einen Schnitt durch eine Ausnehmung in einer zweiten Ausführungsvariante der Erfindung;
- Fig. 3: einen Schnitt durch eine Ausnehmung in einer dritten Ausführungsvariante der Erfindung;
- Fig. 4: einen Schnitt durch eine Ausnehmung in einer vierten Ausführungsvariante der Erfindung;
- Fig. 5: einen Schnitt durch eine Ausnehmung in einer fünften Ausführungsvariante der Erfindung.

Es sind nur die für das Verständnis der Erfindung wesentlichen Elemente gezeigt.

### Weg zur Ausführung der Erfindung

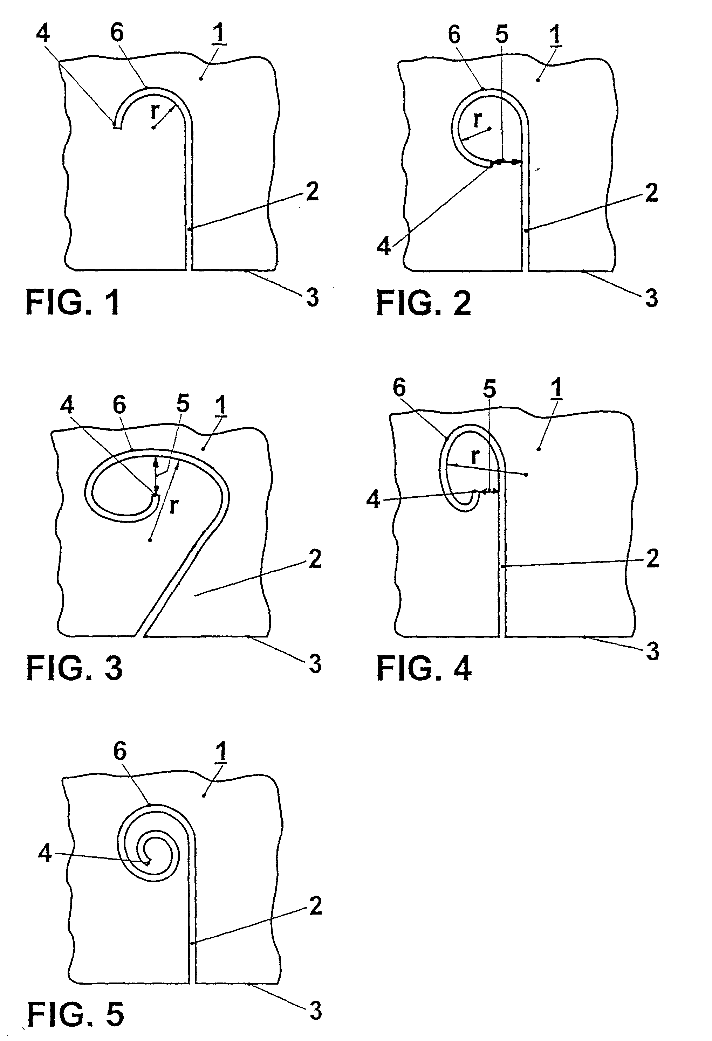

Nachfolgend wird die Erfindung anhand von Ausführungsbeispielen und der Figuren 1 bis 5 näher erläutert.

Fig. 1 zeigt einen Schnitt durch eine gezielt in eine Wand 1 eingebrachte Ausnehmung 2. Diese Ausnehmung 2 ist beispielsweise ein Entlastungsschlitz, der in die Wand 1 mittels geeigneter Herstellungsverfahren (z.B. Elektroerosion) eingebracht wurde. Die Ausnehmung 2 erstreckt sich von der Seitenkante 3 in das Innere der Wand 1 und hat eine Breite von typisch 0,3 mm an aufwärts.

Erfindungsgemäss wird der Abschluss des Entlastungsschlitzes nun so ausgeführt, dass die Spitze 4 der Ausnehmung 2 bezüglich der Haupterstreckungsrichtung der Ausnehmung 2 in ihrer Richtung um etwa 180° umgelenkt wird, so dass der Abschluss des Entlastungsschlitzes 2 in Form eines Halbkreises mit dem Krümmungsradius r in die Wand 1 eingebracht wird. Die Grösse des Radiuses r der Krümmung 6 wird nach Kerb- und Bruchmechanik-Gesichtspunkten ermittelt und grosszügig bemessen, um zu gewährleisten, dass nirgendwo ein Anriss oder gar Risswachstum stattfindet. Die Spitze 4 des Entlastungsschlitzes 2 wird dabei in einen weitgehend entlasteten Bereich hineingebracht und dort positioniert, d. h. sie endet in diesem Bereich.

Die Gestaltung des Abschlusses im Einzelfall hängt erstens von der Grösse der Beanspruchungen und zweitens von ihrer Richtung ab. Ausserdem spielt der verfügbare Platz sowie Fragen der Optimierung - grösstmögliche Sicherheit gegen Anreissen bei kleinstmöglicher Leckage - eine Rolle. Ein weiterer wichtiger Gesichtspunkt ist, wie genau Grösse und Richtung der Belastungen unter allen vorkommenden Betriebsbedingungen bekannt sind oder vorausberechnet werden können.

Fig. 1 zeigt eine eher einfache Form für einen Fall, in dem Beanspruchungsgrösse und -richtung gut bekannt sind.

In den Fig. 2 bis Fig. 5 werden beispielhaft weitere Formen von Abschlüssen gezeigt, die in speziellen Fällen von Vorteil sein können.

Fig. 2 zeigt im Gegensatz zu Fig. 1 wie die Spitze 4 des Schlitzes 2 bezüglich der Haupterstreckungsrichtung des Schlitzes 2 in ihrer Richtung um mehr als 180° umgelenkt wird. Im Beispielsfalle wird der Abschluss der Ausnehmung 2 in Form eines Dreiviertelkeises ausgebildet, wobei auch hier die Spitze 4 in einen weitgehend oder vollständig entlasteten Bereich hineinläuft und dort endet.

Hier sowie bei den folgenden Beispielen bleibt das Wandstück im Inneren des Endbogens noch über eine ausreichend bemessene Materialbrücke 5 mit dem Rest der Wand verbunden.

Die Figuren 3 und 4 zeigen Ausführungsvarianten, bei denen der Ausnehmungsabschluss in Form einer Halb- bis Dreiviertelellipse oder einer ähnlichen Kurve ausgeführt wird. Der grösste Krümmungsradius r wird dabei jeweils an die Stelle der grössten Spannung in der Wand gelegt, so dass die Ellipsen entsprechend unterschiedlich in ihrer Breiten- und Höhenausdehnung ausgeführt sind. Aus Fig. 3 geht auch hervor, dass die Ausnehmung 2 sich nicht zwingend senkrecht von der Seitenkante 3 der Wand 2 aus erstrecken muss.

Schliesslich ist in Fig. 5 in einer Schnittdarstellung eine Ausnehmung 2 in einer Wand 3 dargestellt, bei der der Ausnehmungsabschluss in Form einer Spirale gestaltet wird. Ein solcher Abschluss bietet den grösstmöglichen Widerstand gegen Risswachstum, wenn mit beliebig variierenden Belastungsrichtungen gerechnet werden muss. Alle anderen Merkmale der Erfindung sind wie bereits oben beschrieben enthalten.

Selbstverständlich ist die Erfindung nicht auf die eben beschriebenen Ausführungsbeispiele beschränkt. Die Ausnehmung 2 kann z. B. eine bewusst in die Wand eingearbeitete schwächende, risslenkende Kerbe von einer Tiefe kleiner als die lokale Wanddicke sein, die dafür sorgt, dass sich ein Riss nur in der vorgezeichneten Form bildet und ausbreitet mit dem Vorteil eines minimalen Leckagequerschnitts des in der Restwanddicke gewachsenen Risses.

Ausserdem kann die Ausnehmung 2 z. B. auch ein Riss sein, welcher ungewollt infolge zu hoher Belastung oder infolge von Materialfehlern in der Wand 2 entstanden ist. Um diesen Riss am Weiterwachsen zu hindern und damit die Wand 2 bzw. das Bauteil noch länger beanspruchen zu können, kann nun ein Abschluss in vorstehend dargestellter Form nachträglich durch geeignete Herstellungsverfahren eingebracht werden. Alternativ kann der Abschluss oberflächlich als risslenkende Kerbe eingearbeitet werden oder es könnte auch das Risswachstum gezielt so beeinflusst werden, dass durch die Wahl geeigneter Beanspruchungsbedingungen die Ausbreitungsrichtung des Risses verändert wird, so dass die Rissspitze im Vergleich zur Hauptausbreitungsrichtung eine Umkehrung um mindestens etwa 180° dergestalt erfährt, dass eine Krümmung in Form eines Halb- oder Dreiviertelkreises, einer -ellipse oder -spirale als Rissabschluss entsteht. Der grösste Krümmungsradius r sollte dabei wie bereits oben beschrieben an der Stelle der grössten Spannung realisiert werden, und die Rissspitze wird so in die Wand eingebracht, dass sie in einen weitgehend oder vollständig entlasteten Bereich hineinläuft, wobei das Wandstück im Inneren des Endbogens über eine ausreichend bemessene Materialbrücke mit dem Rest der Wand verbunden bleibt.

### Bezugszeichenliste

- 1: Wand
- 2: Ausnehmung (Schlitz, Kerbe, Riss)
- 3: Seitenkante von Pos. 1
- 4: Spitze von Pos. 2
- 5: Materialbrücke
- 6: Krümmung des Ausnehmungsabschlusses
- r: maximaler Krümmungsradius

## Patentansprüche

1. Verfahren zur Einbringung eines Ausnehmungsabschlusses in ein Bauteil, wobei sich die Ausnehmung (2) von einer Seitenkante (3) einer Wand (1) des Bauteiles mit ihrer Spitze (4) in das Innere der Wand (1) erstreckt, **dadurch gekennzeichnet, dass** die Spitze (4) der Ausnehmung (2) bezüglich der Haupterstreckungsrichtung der Ausnehmung (2) in ihrer Richtung um mindestens etwa 180° umgelenkt wird, wobei die Umlenkung in einer nach Kerb- und Bruchmechanik-Gesichtspunkten grosszügig bemessenen Krümmung (6) erfolgt, der grösste Krümmungsradius (r) an die Stelle der grössten Spannung in der Wand (1) gelegt wird, die Spitze (4) der Ausnehmung (2) in einen zumindestens weitgehend entlasteten Bereich hineingebracht und dort positioniert wird, und das Wandstück im Inneren des Krümmungsbogens über eine ausreichend bemessene Materialbrücke (5) mit dem Rest der Wand (1) verbunden bleibt.

2. Verfahren nach Anspruch 1, **dadurch gekennzeichnet, dass** die Krümmung (6) der Ausnehmung (2) in Form eines Halb- bis Dreiviertelkreises ausgeführt wird.

3. Verfahren nach Anspruch 1, **dadurch gekennzeichnet, dass** die Krümmung (6) der Ausnehmung (2) in Form einer Halb- bis Dreiviertelellipse oder ähnlicher Kurven ausgeführt wird.

4. Verfahren nach Anspruch 1, **dadurch gekennzeichnet, dass** die Krümmung (6) der Ausnehmung (2) in Form einer Spirale ausgeführt wird.

## Claims

1. Method of making a recess termination in a component, the recess (2) extending with its tip (4) from a side edge (3) of a wall (1) of the component into the interior of the wall (1), **characterized in that** the tip (4) of the recess (2) is deflected in its direction by at least about 180° relative to the main extension direction of the recess (2), the deflection being effected in a curvature (6) which is generously dimensioned from the point of view of notch and fracture mechanics, the maximum radius (r) of curvature being placed at the point of maximum stress in the wall (1), the tip (4) of the recess (2) being made in an at least largely relieved region and being positioned there, and the wall piece in the interior of the arc of curvature remaining connected to the rest of the wall (1) via an adequately dimensioned material bridge (5).

2. Method according to Claim 1, **characterized in that** the curvature (6) of the recess (2) is designed in the form of a semicircle up to a three-quarter circle.

3. Method according to Claim 1, **characterized in that** the curvature (6) of the recess (2) is designed in the form of a semi-ellipse up to a three-quarter ellipse or similar curves.

4. Method according to Claim 1, **characterized in that** the curvature (6) of the recess (2) is designed in the form of a spiral.

## Revendications

1. Procédé pour installer une terminaison pour un évidement d'un élément, dans lequel l'évidement (2) s'étend d'une arête latérale (3) d'une paroi (1) de l'élément avec sa pointe (4) dans l'intérieur de la paroi (1), **caractérisé en ce que** la pointe (4) de l'évidement (2) a une direction déviée d'au moins environ 180° par rapport à la direction d'extension principale de l'évidement (2), dans lequel la déviation est réalisée par une courbure (6) largement dimensionnée selon les principes de l'effet d'entaille et de la mécanique de rupture, le plus grand rayon de courbure (r) est placé à l'endroit de la contrainte la plus élevée dans la paroi (1), la pointe (4) de l'évidement (2) est reportée et positionnée dans une région au moins largement déchargée, et la partie de paroi située à l'intérieur de l'arc de la courbure reste reliée au reste de la paroi (1) par un pont de matière (5) de dimensions suffisantes.

2. Procédé suivant la revendication 1, **caractérisé en ce que** la courbure (6) de l'évidement (2) est réalisée en forme d'une moitié ou de trois quarts de cercle.

3. Procédé suivant la revendication 1, **caractérisé en ce que** la courbure (6) de l'évidement (2) est réalisée en forme d'une moitié ou de trois quarts d'une ellipse ou d'une courbe analogue.

4. Procédé suivant la revendication 1, **caractérisé en ce que** la courbure (6) de l'évidement (2) est réalisée en forme de spirale.
